# EUROPEAN PATENT SPECIFICATION

(11) **EP 2 328 063 B1**
(45) Date of publication and mention of the grant of the patent: **10.01.2018**
(21) Application number: 09177543.7
(22) Date of filing: 30.11.2009
(51) Int. Cl.: G06F 3/01

(54) **Portable electronic device and method of controlling same to provide tactile feedback**
Tragbare elektronische Vorrichtung und Verfahren zu deren Steuerung zur Bereitstellung einer taktilen Rückmeldung
Dispositif électronique portable et son procédé de commande pour fournir un retour d'informations tactiles

(43) Date of publication of application: 01.06.2011
(73) Proprietor: BlackBerry Limited, Waterloo, ON N2K 0A7 (CA)
(72) Inventor: Theimer, Wolfgang, Michael, 44799, Bochum (DE)
(74) Representative: MERH-IP Matias Erny Reichl Hoffmann Patentanwälte PartG mbB

(56) References cited:
- EP-A1- 1 587 026
- US-A1- 2008 034 294
- US-A1- 2008 238 886
- US-A1- 2008 304 113
- US-A1- 2009 167 701

## Description

### FIELD OF TECHNOLOGY

The present disclosure relates to electronic devices, including but not limited to control of portable electronic devices to provide tactile feedback.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability and smaller devices have limited space for user input and output. The information displayed may be modified depending on the functions and operations being performed. With continued demand for decreased size of portable electronic devices, space for user input continues to decrease in size.

US 2009/167701 discloses an apparatus that includes a housing section, electronic circuitry, a touch screen, and a user sensory feedback system. The electronic circuitry is mounted within the housing section. The touch screen is on the housing section. The touch screen is configured to sense a touch at an area of the touch screen. The electronic circuitry is configured to analyze a feature displayed at the area of the touch screen. The user sensory feedback system is proximate the housing section. The user sensory feedback system is configured to perform an operation based, at least partially, upon the touch at the area of the touch screen and upon an image analysis of the feature at the area of the touch screen.

Improvements in portable electronic devices are desirable.

### SUMMARY

A method includes displaying information on a display of an electronic device, associating an active area with a part of the information that at least partially matches a search term, and providing tactile feedback in response to detection of the active area for the part of the information.

A computer-readable medium has computer-readable code executable by at least one processor of a portable electronic device to perform the above method.

A portable electronic device includes a display configured to display information. A processor is configured to associate an active area with a part of the information that at least partially matches a search term, and provide tactile feedback in response to detection of the active area for the part of the information.

### BRIEF DESCRIPTION OF THE DRAWINGS

FIG. 1 is a block diagram of a portable electronic device in accordance with the present disclosure.
FIG. 2A illustrates a front view of a portable electronic device in accordance with the present disclosure.
FIG. 2B illustrates a cross-sectional view through the line 204 of FIG. 2A in accordance with the present disclosure.
FIG. 3 is a flow chart illustrating a method of controlling a portable electronic device in accordance with the present disclosure.
FIG. 4 and FIG. 5 illustrate examples of a portable electronic device before and after identifying parts of information that at least partially matches a search term and during detection of a touch on a touch-sensitive display in accordance with the present disclosure.
FIG. 6 illustrates another example of a portable electronic device before and after identifying parts of information that at least partially matches a search term in accordance with the present disclosure.

### DETAILED DESCRIPTION

The following describes a method of controlling an electronic device. The method includes displaying information on a display of the electronic device, associating an active area with a part of the information that at least partially matches a search term, and providing tactile feedback in response to detection the active area for the part of the information.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld

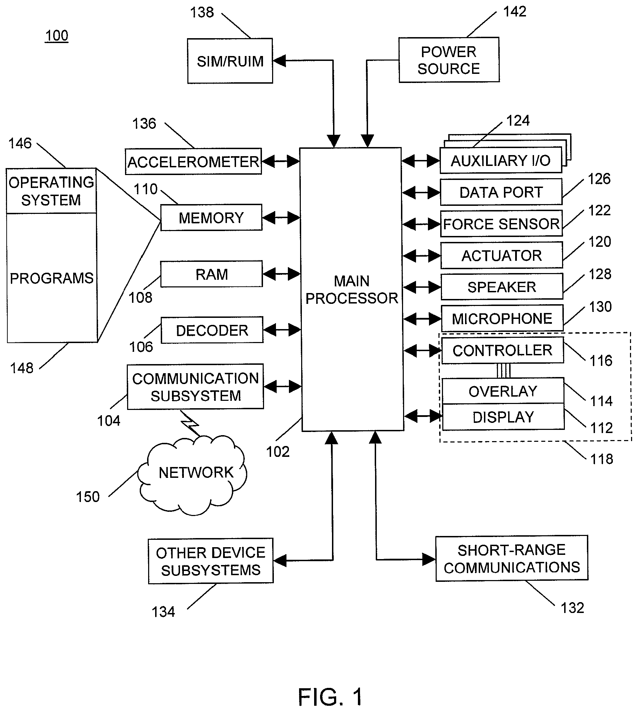

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably connected to an electronic controller 116 that together comprise a touch-sensitive display 118, also known as a touchscreen display, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the processor 102, for example, to determine a location of a touch. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x component may be determined by a signal generated from one touch sensor layer, and the y component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. More than one simultaneous location of contact may occur and be detected. A swipe, also known as a flick, is generally defined for the purposes of this disclosure as a particular type of touch on a touch-sensitive display 118 that begins at an origin point and continues to an end point while touch contact is maintained.

The actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 provides the user with tactile feedback.

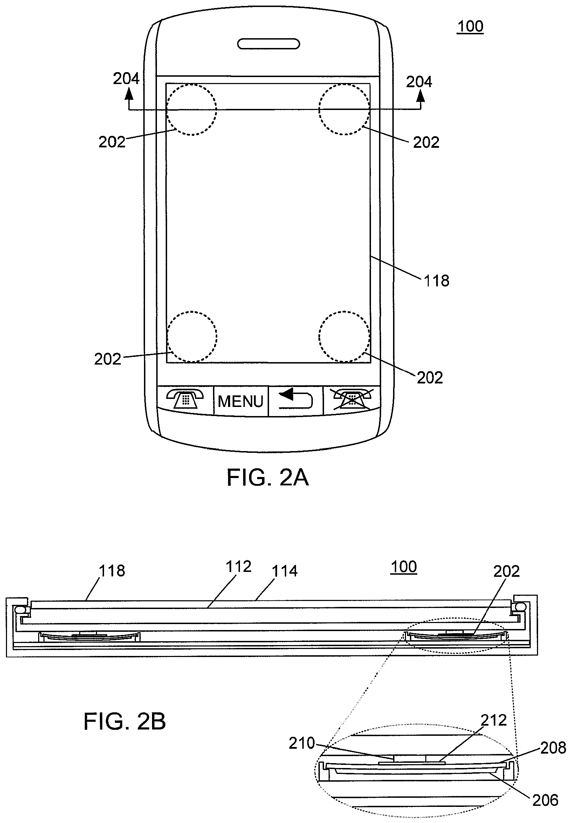

The actuator 120 may comprise one or more piezoelectric (piezo) actuators that provide tactile feedback. FIG. 2A is front view of an example of a portable electronic device 100. In the example shown in FIG. 2A, the actuator 120 comprises four piezo actuators 202, each located near a respective corner of the touch-sensitive display 118. FIG. 2B is a sectional side view of the portable electronic device 100 through the line 204 of FIG 2A. Each piezo actuator 202 is supported within the portable electronic device 100 such that contraction of the piezo actuators 202 applies a force against the touch-sensitive display 118, opposing a force externally applied to the display 118. Each piezo actuator 202 includes a piezoelectric device 206, such as a piezoelectric ceramic disk adhered to a substrate 208, which may be comprised of metal, flexible plastic, and/or other suitable materials. An element 210 that is advantageously at least partially flexible and comprises, for example, hard rubber may be located between the piezo device 206 and the touch-sensitive display 118. The element 210 does not substantially dampen the force applied to or on the touch-sensitive display 118. Force sensors 212 may also be located between the element 210 and the substrate 208. The substrate 208 bends when the piezoelectric device 206 contracts diametrically due to build up of voltage/charge at the piezoelectric device 206 or in response to an external force applied to the touch-sensitive display 118. The applied voltage or current, and thus the charge, may be varied to control the force applied by the piezo actuators 202 on the touch-sensitive display 118. The voltage/charge on the piezo actuators 202 may be removed by a controlled discharge current that causes the piezoelectric device 206 to expand diametrically, thereby decreasing the force applied by the piezo actuators 202 on the touch-sensitive display 118. The voltage/charge may advantageously be removed over a relatively short period of time to provide tactile feedback to the user. Absent an external force applied to the overlay 114 and absent a voltage/charge on the piezoelectric device 206, the piezo actuator 202 may be slightly bent due to a mechanical preload.

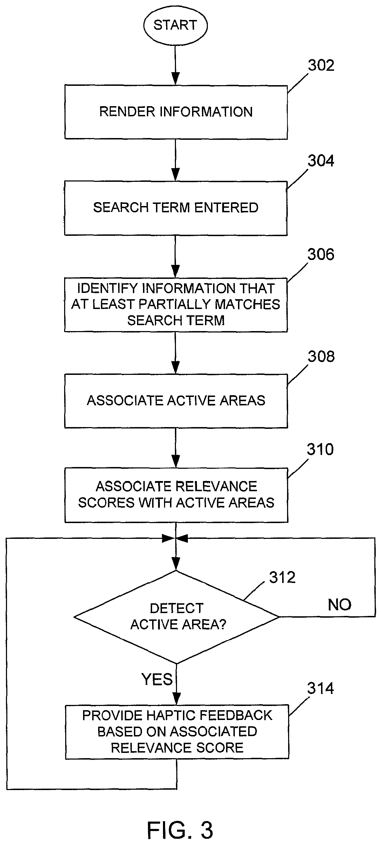

A flowchart illustrating a method controlling an electronic device 100 is shown in FIG. 3. The method may be carried out by software executed by, for example, the processor 102. Coding of software for carrying out such a method is within the scope of a person of ordinary skill in the art given the present description. Information is rendered 302 for display on the display 112. The information may be information displayed when an application, such as a web browser, contacts, email, calendar, music player, spreadsheet, word processing, operating system interface, and so forth, is executed. The flowchart of FIG. 3 is simplified for the purpose of explanation. Additional or fewer processes may be carried out.

A search term is entered 304 via the touch-sensitive display 118 of the portable electronic device 100. The search term may be entered in a search option or via a menu. For example, the search term may include one or more character strings such as one or more words to be searched within information that is or may be displayed on the display 112, such as a webpage or document being scrolled through or navigated. The search term may also include one or more character strings for searching data associated with information that may be rendered on the display. The data associated with the information may include, for example, a file name, a folder name, a storage date, a creation date, a tag, an author, an artist, a title, or any other data. The information may include audio files, video files, photos, documents, email, contacts, or any other suitable information. For photo searching, for example, photo content may be utilized as the search term to search for photos with similar content. A search is conducted to identify 306 parts of the information that at least partially match the search term.

For a character string, the search may identify 306 any character strings that match the character string without any missing or different characters. The search may additionally or alternatively identify 306 character strings that partially match the character string of the search term. For example, the search may identify character strings with one or more unmatched characters, one or more missing characters, and/or one or more additional characters. A maximum number of unmatched, missing and/or additional characters may be selected or set for all searches. Alternatively, the maximum number may be dynamically determined based on, for example, the total number of characters in the search term, or the total number of parts of the information identified. Identifying parts of the information that partially match the character string from the search term allows for typographical errors, alternative tenses of verbs or forms of words, and/or additional words in a string. Capitalization of letters may be ignored for the purpose of matching or may be utilized in identifying parts of the information. The number of unmatched characters may be selected by the user, and may be selected to be 0.

Alternatively, the search may be performed on file names of non-textual information such as media or other data objects. The search may also be performed on information embedded in a file or tagged with a file. The search term may be entered 304 upon, for example, selection of an information category or selection of an example data object. The search is conducted to identify 306 other media or data objects that belong to the information category or that are determined to be similar or related.

Information may be entered 304 upon selection, download, or entry of a file, such as a photo from a vacation. Information about the photo may be entered, such as the contents, e.g., a landscape, people, animals, and so forth. The search identifies 306 photos with similar content or related photos that are taken or stored on the same date.

An active area on the display 112 is associated 308 with each of the parts of the information identified 306. The active area may be the area at which the part of the information is displayed or may include a border surrounding the part of the information. A relevance level 310 may optionally be associated with each of the active areas based on the match between the part of the information and the search term. The relevance level may include multiple levels and the relevance level that is associated with each active area is graded based on the degree of match. For example, an active area associated with a part of the information that does not include any unmatched, missing or additional characters has a higher relevance level than an active area associated with a part of the information that includes an unmatched, missing or additional character. Further, the relevance level may differ depending on whether the part of the information has an unmatched character, or a missing character, or an additional character. Thus, for example, a part of the information that has an additional character may have a higher relevance level than a part of the information that is missing a character.

When an active area is detected 312, for example when a touch or a cursor is detected to be associated with the active area or when an active area is displayed on the display 112, i.e., when a search term is displayed within the displayed information, tactile feedback is provided 314 and the tactile feedback that is provided is dependent on the associated relevance score. Tactile feedback may include, for example, a vibration and/or pulse feedback of various magnitudes and/or different frequencies. The magnitude of the feedback may be dependent on the relevance score. Optionally, other forms of tactile feedback may be provided. When a determination is made 312 that the touch or the cursor is not associated with the active area or a new touch is detected that is not associated with an active area, the tactile feedback is not provided. Tactile feedback may be provided when a touch or cursor is associated with the active areas. The tactile feedback may continue while the touch or cursor is associated with an active area or while a search term is displayed and may be discontinued when the touch or cursor is no longer associated with the active area, when no search term is displayed, or when an event occurs to stop the feedback. Such an event may include, for example, selection of an option to exit the program, cancel the feedback, or enter a new search term. Scrolling may also slow down or stop when a touch is associated with an active area or when the search term is displayed on the display 606, i.e., when a search term associated with an active area is displayed.

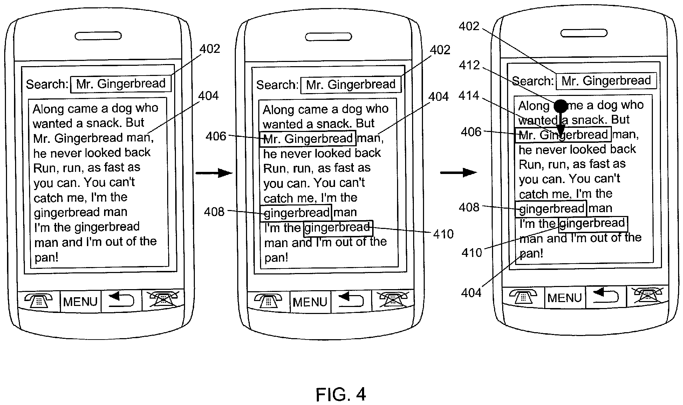

An example of tactile feedback based on relevance level is shown in FIG. 4. In this example, text 402 is displayed on the display 112 and the character string "Mr. Gingerbread" is entered in a search field 404. The character string is entered upon entry into the search field 404 and a search is conducted to identify parts of the text 402 that at least partially match the character string "Mr. Gingerbread". For the purposes of the present example, three parts of the information are identified, including a part 406 that matches and two parts 408, 410 that partially match the character string from the search term. An active area is associated with each of the parts 406, 408, 410 and a relevance level is associated with each of the active areas. The relevance level associated with the active area for the part 406 is higher than the relevance level associated with the active areas of the parts 408, 410. For example, a relevance level of 1 may be associated with the active area for the part 406 while a relevance level between 0 and 1 may be associated with the active area for the parts 408, 410 because the parts are only partial matches. A relevance level of 0.7 may be associated with the active area for the parts 408, 410, for example.

In this example, a touch is detected on the touch-sensitive display 118, at a location 412 that is not associated with the active areas of the parts 406, 408, 410. When the touch moves to a new location 414 on the touch-sensitive display 118, the touch is detected at a location associated with the active area for the part 406 and tactile feedback is provided. The tactile feedback may include, for example, a pulse generated utilizing the piezo actuators 202.

Alternatively, the voltage/charge of the piezo actuators 202 may be generally constant, and the resulting force applied by the piezo actuators 202 on the touch-sensitive display 118 may be generally constant when a touch is detected on the touch-sensitive display 118 at a location that is not associated with the active areas of the parts 406, 408, 410. When a touch is detected at a location associated with the active area for the part 406, the voltage/charge of the piezo actuators 202 may be varied to vibrate the touch-sensitive display 118. When a touch is detected at a location associated with the active areas of the parts 408, 410, the touch-sensitive display is vibrated at lower magnitude of vibration, for example. Thus, the vibration is greater when the touch is associated with the active area for the part 406 compared to the vibration when the touch is associated with the active area for the parts 408, 410, and no vibration is provided when the touch is not associated with the active areas of the parts 406, 408, 410.

Alternatively, ultrasonic vibration, also referred to as ultrasonic excitation, of the display may be provided by vibrating the touch-sensitive display 118 at ultrasonic frequency utilizing the piezo actuators 202. When the touch moves on the touch-sensitive display 118 to a new location 414 that is an active area for the part 406, the ultrasonic vibration is stopped. The ultrasonic vibration facilitates movement of the touch and stopping the vibration increases the friction felt along the touch-sensitive display 118 during movement of the touch, thereby providing tactile feedback.

When the touch moves to a location that is not associated with the active area for the part 406, the touch-sensitive display 118 is vibrated at ultrasonic frequency again. When the touch moves to a new location associated with the active area for the part 408, the magnitude of the vibration is reduced. The reduced magnitude of oscillation increases friction during movement of the touch such that the friction is greater than the friction when the touch is not associated with the active areas of the parts 406, 408, 410 and less than the friction when the touch is associated with the active area for the part 406. Tactile feedback is provided as movement of the touch to the areas of the parts 406, 408, 410 is facilitated.

In addition to the tactile feedback, the parts of the information that at least partially match the search term may be visually identified, for example, by highlighting.

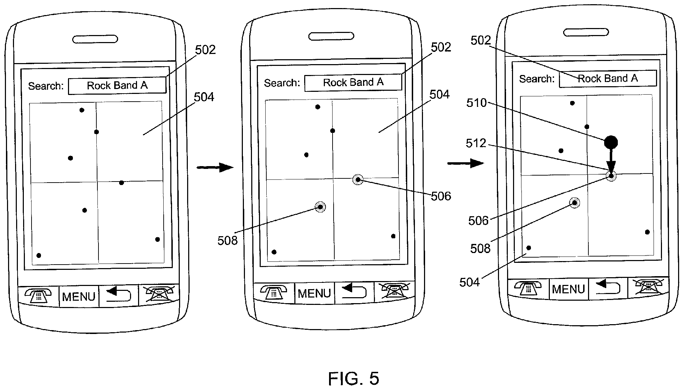

Another example of tactile feedback based on relevance level is shown in FIG. 5. In this example, music stored on the portable electronic device 100 is displayed in a graphical representation 502 on the display 112. Each song or track is represented by a dot on a portion of the display 112 that is divided into quadrants representing different genres of music. A pop-up window may be provided with a song title when a touch is detected at a location associated with an active area for any one of the songs. The character string "Rock Band A" is entered in a search field 504 and a search is conducted to identify songs that are represented by the dots and that include an artist name, a song title, or an album name that at least partially matches the character string "Rock Band A". For the purposes of the present example, two songs are identified including one song 506 that matches and one song 508 that partially matches the character string from the term. An active area is associated with each of the songs 506 508 that at least partially match, and a relevance level is associated with each of the active areas. The relevance level associated with the active area for the song 506 is higher than the relevance level associated with the active area for the song 508. For example, a relevance level of 1 may be associated with the active area for the song 506 while a relevance level between 0 and 1 may be associated with the active area for the song 508.

A touch is detected on the touch-sensitive display 118 at a location 510 associated with the active areas of the songs 506, 508. When the touch moves to a new location 512 on the touch-sensitive display 118, the touch is detected at a location associated with the active area for the song 506 and the touch-sensitive display 118 is vibrated.

When the touch moves to a location that is not associated with the active area for the song 506, the vibration is stopped. When the touch moves and the touch is detected at a location associated with the active area for the song 508, the touch-sensitive display 118 is vibrated at a lower magnitude of vibration than the vibration when the touch is associated with the active area for the song 506.

Alternatively, the touch-sensitive display 118 may be ultrasonically vibrated when a touch is not associated with the active areas of the songs 506, 508 and the ultrasonic vibration may be stopped when the touch is associated with the active area for the song 506 and reduced when the touch is associated with the active area for the song 508.

The force on the piezo actuators 202 may be controlled to provide many other forms of tactile feedback when the touch is associated with an active area that at least partially matches the search term.

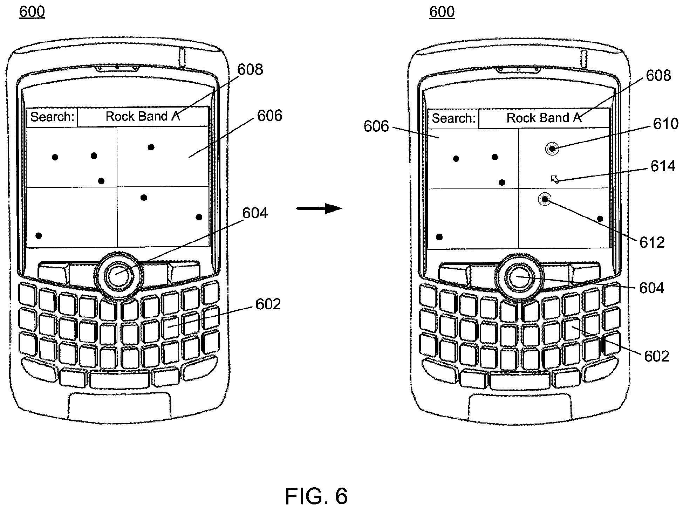

Another example of tactile feedback based on relevance level is shown in FIG. 6. In this example, the portable electronic device 600 does not include a touch-sensitive overlay 114 or controller 116. Instead, the portable electronic device includes a keyboard 602 and a trackball 604 for controlling, for example, a cursor on a display 606. A brake or other device, such as an electromechanical brake, may be utilized to add resistance to movement of the trackball, making movement of the trackball more difficult, for example, when a cursor is associated with an active area on the display 606 or when a search term is displayed on the display 606 such as may be detected by an active area associated with displayed information. Scrolling may also slow down or stop during rolling of the trackball 604 when a cursor is associated with an active area or when the search term in displayed on the display 606. Optionally, a piezo actuator may be controlled to provide the brake. Many other features of the portable electronic device 600 may be similar to those described above with reference to FIG. 1 and are not described again.

Music stored on the portable electronic device 600 is displayed in a graphical representation on the display 112 and each song or track is represented by a dot. The character string "Rock Band A" is entered in a search field 608 using the keyboard 602. The character string is entered upon entry into the search field 608 and a search is conducted to identify songs, that are represented by the dots, and that have associated information such as an artist name, a song title, or an album name that at least partially matches the character string "Rock Band A". For the purposes of the present example, two songs are identified, including one song 610 that matches and one song 612 that partially matches the character string from the search term. An active area is associated with each of the songs 610, 612 that at least partially match and a relevance level is associated with each of the active areas. The relevance level associated with the active area for the song 610 is higher than the relevance level associated with the active area for the song 612. For example, a relevance level of 1 may be associated with the active area for the song 610 while a relevance level between 0 and 1 may be associated with the active area for the song 612.

The trackball 604 is rolled to move the cursor on the display. When the cursor 614 is detected at a location associated with the active area for the song 610, a brake is applied to the trackball 604, and greater applied force is required by the user to move the trackball 604 and therefore to move the cursor 614 by comparison to the force utilized to move the trackball 604 when the cursor 614 is not associated with the active area for the song 610. When the cursor 614 is detected at a location associated with the active area for the song 612, the brake is applied to the trackball 604 so that the applied force required to move the trackball 604 is greater than the force utilized when the cursor is associated with the active areas of the songs 610, 612 and less than the force utilized when the cursor is associated with the active area for the song 610.

In the above-described examples, the information is displayed on the touch-sensitive display. The information may not all fit on the touch-sensitive display, however, and scrolling may be utilized to display various segments of the information. The search may be a search through all of the information including the information that is not displayed at the time the search term is entered. Active areas may be associated with information not displayed. The information and the active areas may be displayed during scrolling. During scrolling, a touch on the touch-sensitive display may be associated with an active area when the touch or cursor is on the active area. Alternatively, a touch may be associated with an active area when the active area scrolls to a horizontal position corresponding to a horizontal position of the touch or the cursor, on the display, during vertical scrolling or when the active area scrolls to a vertical position corresponding to a vertical position of the touch or the cursor during horizontal scrolling. Alternatively, tactile feedback may be provided when display of information associated with an active area is detected.

The information identified may be limited based on a maximum number of occurrences of identified information on the display and may also be limited based on proximity to other information that is identified so that information identified is not close together or adjacent. Information with the highest relevance scores may be identified first and haptic feedback may not be provided for information with lower relevance scores.

The control of the portable electronic device facilitates user-interaction and selection of information such as characters, text, images, icons, links and so forth. Tactile feedback is provided when a touch or a cursor is associated with an active area, before a selection is made. Selections may be made based on tactile feedback. Further, features may be confirmed prior to selection as the tactile feedback provides confirmation that the touch is at a location associated with information that at least partially matches the search. Thus, selection of features is facilitated, thereby decreasing use time and power requirements and increasing battery life.

## Claims

1. A method comprising:
displaying information on a display (112, 606) of an electronic device (100);
associating an active area with a part of the information that at least partially matches a character string search term;
associating a relevance level with the active area; and
providing tactile feedback in response to detection of the active area for the part of the information, wherein a magnitude of the tactile feedback is dependent on the relevance level of the active area.

2. The method of claim 1, wherein detection comprises detection of at least one of a touch and a cursor associated with the active area.

3. The method according to any preceding claim, comprising determining an active area for each part of the information.

4. The method according to any preceding claim, wherein displaying information comprises displaying at least one of text and a representation of objects stored in memory (108).

5. The method according to any preceding claim, wherein providing tactile feedback comprises controlling a piezoelectric actuator (120).

6. The method according to any preceding claim, wherein providing tactile feedback comprises reducing vibration of a touch-sensitive display (118).

7. The method according to any preceding claim, wherein providing tactile feedback comprises applying a brake to a trackball.

8. A computer-readable medium having computer-readable code executable by at least one processor of an electronic device (100) to perform the method of any of claims 1 to 7.

9. An electronic device (100) comprising:
a display (112, 606) configured to display information; and
a processor (102) configured to:
associate an active area with a part of the information that at least partially matches a character string search term;
associate a relevance level with the active area; and
provide tactile feedback in response to detection of the active area for the part of the information, wherein a magnitude of the tactile feedback is dependent on the relevance level of the active area.

10. The electronic device according to claim 9, wherein the display (606), comprises a touch-sensitive display (118) and wherein the tactile feedback is provided when a touch or cursor is detected at a location associated with the active area.

11. The electronic device according to claim 9 or 10, comprising a trackball (604) configured to control a cursor, and wherein the tactile feedback is provided when the cursor is at a location associated with the active area.

## Patentansprüche

1. Verfahren, das umfasst:
Anzeigen von Informationen auf einer Anzeige (112, 606) eines elektronischen Geräts (100);
Verknüpfen einer aktiven Fläche mit einem Teil der Informationen, der zumindest teilweise einem Zeichenkettensuchbegriff entspricht;
Verknüpfen eines Relevanzlevel mit der aktiven Fläche; und
Bereitstellen von taktilem Feedback in Reaktion auf die Erfassung der aktiven Fläche für den Teil der Informationen, wobei eine Größenordnung des taktilen Feedbacks von dem Relevanzlevel der aktiven Fläche abhängig ist.

2. Verfahren nach Anspruch 1, wobei die Erfassung die Erfassung von mindestens einem von einer mit der aktiven Fläche verknüpften Berührung oder einem Cursor umfasst.

3. Verfahren nach einem der vorhergehenden Ansprüche, das das Bestimmen einer aktiven Fläche für jeden Teil der Informationen umfasst.

4. Verfahren nach einem der vorhergehenden Ansprüche, wobei das Anzeigen von Informationen das Anzeigen von mindestens einem von Text und einer Darstellung von im Speicher (108) gespeicherten Objekten umfasst.

5. Verfahren nach einem der vorhergehenden Ansprüche, wobei das Bereitstellen von taktilem Feedback das Steuern eines piezoelektrischen Aktuators (120) umfasst.

6. Verfahren nach einem der vorhergehenden Ansprüche, wobei das Bereitstellen von taktilem Feedback das Reduzieren von Vibration einer berührungsempfindlichen Anzeige (118) umfasst.

7. Verfahren nach einem der vorhergehenden Ansprüche, wobei das Bereitstellen von taktilem Feedback das Anwenden einer Bremse an einen Trackball umfasst.

8. Computerlesbares Medium mit computerlesbarem Code, der von mindestens einem Prozessor eines elektronischen Geräts (100) ausgeführt werden kann, um das Verfahren nach einem der Ansprüche 1 bis 7 durchzuführen.

9. Elektronisches Gerät (100), welches umfasst:
eine Anzeige (112, 606), die dazu ausgelegt ist, Informationen anzuzeigen; und
einen Prozessor (102), der dazu ausgelegt ist:
eine aktive Fläche mit einem Teil der Informationen zu verknüpfen, der zumindest teilweise einem Zeichenkettensuchbegriff entspricht;
einen Relevanzlevel mit der aktiven Fläche zu verknüpfen; und
taktiles Feedback in Reaktion auf die Erfassung der aktiven Fläche für den Teil der Informationen zu verknüpfen, wobei eine Größenordnung des taktilen Feedbacks von dem Relevanzlevel der aktiven Fläche abhängig ist.

10. Elektronisches Gerät nach Anspruch 9, wobei die Anzeige (606) eine berührungsempfindliche Anzeige (118) umfasst und wobei das taktile Feedback bereitgestellt wird, wenn eine Berührung oder ein Cursor an einer mit der aktiven Fläche verknüpften Stelle erfasst wird.

11. Elektronisches Gerät nach Anspruch 9 oder 10, das einen Trackball (604) umfasst, der dazu ausgelegt ist, einen Cursor zu steuern, und wobei das taktile Feedback bereitgestellt wird, wenn sich der Cursor an einer mit der aktiven Fläche verknüpften Stelle befindet.

## Revendications

1. Procédé comprenant :
l'affichage d'informations sur un affichage (112, 606) d'un dispositif électronique (100) ;
l'association d'une zone active avec une partie des informations qui, au moins partiellement, correspond à un terme de recherche à chaîne de caractères ;
l'association d'un degré de pertinence avec la zone active ; et
la fourniture d'un retour d'informations tactile en réponse à la détection de la zone active pour la partie des informations, une grandeur du retour d'informations tactile dépendant du degré de pertinence de la zone active.

2. Procédé selon la revendication 1, dans lequel la détection comprend la détection d'au moins un élément parmi un toucher et un curseur associés avec la zone active.

3. Procédé selon l'une quelconque des revendications précédentes, comprenant la détermination d'une zone active pour chaque partie des informations.

4. Procédé selon l'une quelconque des revendications précédentes, dans lequel l'affichage d'informations comprend l'affichage d'au moins un élément parmi un texte et une représentation d'objets stockés en mémoire (108).

5. Procédé selon l'une quelconque des revendications précédentes, dans lequel la fourniture d'un retour d'informations tactile comprend la commande d'un actionneur piézoélectrique (120).

6. Procédé selon l'une quelconque des revendications précédentes, dans lequel la fourniture d'un retour d'informations tactile comprend la réduction de vibration d'un affichage tactile (118).

7. Procédé selon l'une quelconque des revendications précédentes, dans lequel la fourniture de retour d'informations tactile comprend l'application d'un frein sur une boule de commande.

8. Support pouvant être lu par ordinateur comportant un code pouvant être lu par ordinateur exécutable par au moins un processeur d'un dispositif électronique (100) afin de mettre en oeuvre le procédé selon l'une quelconque des revendications 1 à 7.

9. Dispositif électronique (100) comprenant :
un affichage (112, 606) configuré pour afficher des informations ; et
un processeur (102) configuré pour :
associer une zone active avec une partie des informations qui, au moins partiellement, correspond à un terme de recherche à chaîne de caractères ;
associer un degré de pertinence avec la zone active ; et
fournir un retour d'informations tactile en réponse à la détection de la zone active pour la partie des informations, une grandeur du retour d'informations tactile dépendant du degré de pertinence de la zone active.

10. Dispositif électronique selon la revendication 9, dans lequel l'affichage (606), comprend un affichage tactile (118) et dans lequel le retour d'informations tactile est fourni lorsqu'un toucher ou un curseur est détecté en un emplacement associé avec la zone active.

11. Dispositif électronique selon la revendication 9 ou 10, comprenant une boule de commande (604) configurée pour commander un curseur, et le retour d'informations tactile étant fourni lorsque le curseur se trouve en un emplacement associé avec la zone active.
